# FASCICULE DE BREVET EUROPEEN

(11) **EP 4 450 144 B1**
(45) Date de publication et mention de la délivrance du brevet: **15.10.2025**
(21) Numéro de dépôt: 23169225.2
(22) Date de dépôt: 21.04.2023
(51) Int. Cl.: B01D 53/00, B01D 53/22, C01B 32/50, F25J 3/06, F25J 1/00, B01D 53/26, F25J 3/02

(54) **PROCÉDÉ DE LIQUÉFACTION DE DIOXYDE DE CARBONE**
VERFAHREN ZUR VERFLÜSSIGUNG VON KOHLENDIOXID
METHOD FOR LIQUEFYING CARBON DIOXIDE

(43) Date de publication de la demande: 23.10.2024
(73) Titulaire: Cryocollect, 75006 Paris (FR)
(72) Inventeur: SAYAH, Haytham, 75006 PARIS (FR); BOU MALHAM, Christelle, 75006 PARIS (FR); KHAIRALLAH, Philippe, 75006 PARIS (FR)
(74) Mandataire: Bandpay & Greuter

(56) Documents cités:
- CN-A- 107 300 294
- US-A1- 2007 231 244
- US-A1- 2012 137 728

## Description

### DOMAINE TECHNIQUE

La présente invention porte sur un procédé de production de dioxyde de carbone liquide à partir d'un gaz comportant plus de 70% en volume de dioxyde de carbone. L'invention a également pour objet un dispositif de production de dioxyde de carbone liquide et son utilisation

### ETAT DE LA TECHNIQUE ANTERIEURE

A l'heure actuelle, il est recherché des procédés pour valoriser les déchets, et notamment les déchets issus de la biomasse. A cet effet, des procédés de méthanisation se développent.

La méthanisation est un processus de décomposition de matières organiques. Elle consiste en une fermentation d'effluents d'élevage ou de sous-produits issus de l'industrie agro-alimentaire dont le principe est le suivant : les effluents organiques sont stockés dans une cuve hermétique que l'on appelle « digesteur », dans laquelle ils sont soumis à l'action de micro-organismes (bactéries) en l'absence d'oxygène (fermentation anaérobie) pendant un temps de séjour déterminé (en général d'environ 60 jours). Ce procédé permet de générer du biogaz, qui comporte entre autres du méthane (CH₄, dans des proportions de 50% à 70%), et du dioxyde de carbone (CO₂) ainsi qu'un résidu organique (dit « digestat » utilisé comme fertilisant). Le biogaz peut être transformé soit en électricité, soit en gaz et en carburant pour véhicules.

La méthanisation représente un intérêt économique substantiel ; le biogaz produit peut se substituer au gaz naturel dans tous ses usages actuels : production de chaleur, production d'électricité et carburant pour véhicules, et le digestat est totalement valorisé, notamment sous forme d'engrais dont la composition est bien plus complète que celle d'un engrais chimique.

La méthanisation présente également un intérêt environnemental, car le biogaz est une énergie renouvelable. Si sa production et son utilisation engendrent toutefois des rejets polluants dans l'atmosphère (CO₂), ceux-ci restent moins importants que ceux des énergies fossiles.

Le procédé selon l'invention vise à valoriser un gaz, sous-produit de la méthanisation. Lors de la méthanisation, un gaz comportant majoritairement du dioxyde de carbone, appelé « gaz pauvre », est produit. L'invention vise à valoriser ce gaz pauvre en isolant et en purifiant le dioxyde de carbone de manière à obtenir du dioxyde de carbone sous forme liquide de grade alimentaire, voire pharmaceutique. Le dioxyde de carbone produit peut être utilisé par exemple pour la fabrication d'eau pétillante. Il peut intervenir dans des brasseries. Dans le domaine pharmaceutique, il peut être utiliser pour la cryogénie. Dans le domaine agricole, il peut être utiliser pour chauffer des serres.

Dans le même contexte, il est également possible de valoriser des gaz riches en dioxyde de carbone, qui sont produits par des cimenteries, ou encore des procédés de vaporeformage ou d'oxycombustion. De manière générale, le procédé selon l'invention vise à valoriser les gaz riches en dioxyde de carbone, qui sont des sous-produits de réaction et qui sont généralement envoyés à l'atmosphère. Le procédé selon l'invention isole le dioxyde de carbone présent dans ces gaz, le dioxyde de carbone est purifié puis liquéfié.

Le document CN107300294 décrit un appareil de liquéfaction de dioxyde de carbone et un procédé d'un système de capture de carbone de gaz de combustion. La liquéfaction du CO2 est obtenue par expansion étranglée du CO2 supercritique à haute pression, le sous-refroidissement du CO2 liquéfié est réalisé par surpression via la pompe de surpression.

Le document US2007/231244 porte sur un procédé de purification d'un flux contenant du dioxyde de carbone, comprenant une étape de compression du flux d'alimentation, une étape de refroidissement, une étape de détente pour générer de la réfrigération, puis une étape de vaporisation, puis une étape de compression du gaz par un compresseur pour produire un produit de dioxyde de carbone comprimé.

Le document US2012/137728 concerne un système et un procédé permettant de capturer et de séparer le dioxyde de carbone de flux de gaz mixtes. Le flux de gaz est traité dans une structure comprenant un module de compression comprenant une pluralité de compresseurs, de refroidisseurs intermédiaires et de séparateurs de condensats inter-étages.

Ce procédé selon l'invention vise à obtenir du dioxyde de carbone de niveau de pureté très élevé. Le dioxyde de carbone liquéfié obtenu peut être de grade alimentaire, en respectant la norme EIGA Doc 126-11 (annexe 1, page 6) ou de grade pharmaceutique en respectant la pharmacopée européenne et la BPF.

Ce procédé présente l'avantage d'être peu couteux en énergie et de conduire à un bon rendement.

Ce procédé peut présenter également l'avantage de recycler la totalité des autres composants du gaz.

### RESUME

Ainsi, l'invention concerne un procédé de de production de dioxyde de carbone liquide à partir d'un gaz comportant plus de 70% en volume de dioxyde de carbone comprenant les étapes successives suivantes :
a) une ou plusieurs étapes de filtration au charbon actif puis
b) une ou plusieurs étapes de refroidissement du gaz, la température du gaz en sortie de cette étape étant comprise entre 10 et 20°C, puis
c) une étape de surpression du gaz, la pression du gaz en sortie de cette étape étant comprise entre 1,05 et 1,40 bar,
d) une ou plusieurs étapes de refroidissement du gaz, puis
e) une étape de compression du gaz, la pression du gaz en sortie de cette étape étant comprise entre 15 et 25 bars, puis
f) une ou plusieurs filtrations puis
g) une étape de séchage du gaz, puis
h) une ou plusieurs filtrations puis
i) une étape de liquéfaction du gaz, le fluide en sortie de cette étape étant à une température comprise entre -25°C et -35°C, puis
j) une étape de distillation du fluide de manière à isoler le dioxyde de carbone liquéfié
k) une étape de récupération du dioxyde de carbone sous forme liquide issu de l'étape j),
l) une étape de liquéfaction du gaz récupéré en haut de la colonne de distillation à l'étape j), le gaz en sortie de cette étape étant à une température comprise entre - 35°C et -45°C, puis
m) une étape de séparation de la phase liquide de la phase gazeuse du fluide issu de l'étape de liquéfaction l), puis
n) une étape de recyclage de la phase liquide issue de la séparation de l'étape m) vers l'étape j) de distillation.

Le procédé peut en outre comporter une étape de filtration à particules entre les étapes a) et b).

Le procédé peut en outre comporter une étape de refroidissement du gaz entre les étapes h) et i).

Le procédé peut en outre comporter les étapes successives suivantes :
- une étape de chauffage de la phase gazeuse issue de l'étape m),
- une étape de filtration sur membrane de la phase gazeuse réchauffée,
- une étape de recyclage du gaz issu de l'étape précédente de filtration et composé de plus de 50% en volume par rapport au volume total de gaz de dioxyde de carbone, avant d'étape de surpression c).

Le gaz comportant plus de 70% en volume de dioxyde de carbone peut être un gaz provenant d'une unité de méthanisation, un gaz provenant d'une unité d'épuration d'un biogaz, un gaz provenant d'une unité de vaporeformage, un gaz provenant d'une unité d'oxycombustion, ou encore un gaz provenant d'une unité de récupération des gaz produits par une cimenterie.

L'invention a également pour objet un dispositif de production de dioxyde de carbone liquide (1) à partir d'un gaz comportant plus de 70% en volume de dioxyde de carbone comportant les éléments suivants, connectés fluidiquement les uns aux autres et dans cet ordre :
- au moins deux unités de filtration (F101, F102, F103) montés en série,
- un échangeur de chaleur (E101) de manière à refroidir le gaz,
- un surpresseur (SP),
- un réservoir tampon (TK101),
- au moins deux échangeurs (E102, E103) montés en série,
- un compresseur sec sans huile (CP),
- au moins une unité de filtration (F104, F105),
- un dispositif de séchage (D), de manière à éliminer les traces d'humidité,
- au moins une unité de filtration (F106),
- un réservoir tampon (TK102),
- au moins un échangeur de chaleur (E104),
- un liquéfacteur (E105),
- une colonne de distillation (DC),
- le pied de la colonne de distillation (DC) étant connecté fluidiquement à une conduite (C2) permettant la récupération du dioxyde de carbone liquéfié,
- la tête de la colonne de distillation (DC) étant connectée à un liquéfacteur (E106) de manière à liquéfier le dioxyde de carbone restant dans le gaz, puis connectée à un séparateur (Sep),
- une conduite (C3) connecte le séparateur (Sep) à la colonne de distillation (DC), permettant le recyclage de la phase liquide comportant majoritairement du dioxyde de carbone.

Le compresseur (CP) peut être compresseur multi-étagé, muni de au moins deux compresseurs montés en série (CP201, CP202), et muni d'au moins deux échangeurs de chaleur (E211, E212 et E213, E214) montés en série et positionnés en aval de chaque compresseur.

Les liquéfacteurs (E105, E106)peuvent être reliés à des dispositif de refroidissement, comportant au moins deux circuits de refroidissement montés en cascade (33, 34).

Le séparateur (Sep) peut être connecté fluidiquement à un échangeur thermique (E107), puis à une unité de filtration (F107) sur membrane,
une conduite (C4) relie l'unité de filtration (F107) à la conduite en amont du surpresseur (SP) de manière à recycler le gaz comportant du dioxyde de carbone.

La conduite (C2) disposée en sortie de la colonne de distillation (DC) peut être connectée à une vanne (V), puis à un réservoir de stockage (STK), récupérant le dioxyde de carbone liquéfié.

Le dispositif peut comporter au moins une unité de filtration entre échangeur de chaleur (E104) et le liquéfacteur (E105).

Le dispositif peut comporter au moins une unité de filtration entre un le réservoir tampon (TK102) et échangeur de chaleur (E104).

Le dispositif peut être disposé à l'intérieur d'un container, de préférence un container de transport maritime.

L'invention porte enfin sur l'utilisation du dispositif pour liquéfier un gaz provenant d'une unité de méthanisation, d'une unité d'épuration d'un biogaz, d'une unité de vaporeformage, d'une unité d'oxycombustion, d'une unité de récupération des gaz produits par une cimenterie.

### BREVE DESCRIPTION DES FIGURES

Des exemples non-limitatifs vont maintenant être discutés en référence aux figures.
La figure 1 est un schéma de l'installation mettant en œuvre le procédé selon l'invention. La figure 1 sert également de support pour des exemples de l'invention généralisée.
La figure 2 est un schéma d'un compresseur bi-étagé.
La figure 3 est un schéma d'un dispositif de refroidissement utilisable au niveau des liquéfacteurs de l'installation selon l'invention.

### DESCRIPTION DETAILLEE

D'autres caractéristiques, aspects, objets et avantages de la présente invention apparaîtront encore plus clairement à la lecture de la description qui suit.

Il est précisé que les expressions « de ...à ... » et « compris entre ... et .... » utilisées dans la présente description doivent s'entendre comme incluant chacune des bornes mentionnées.

Sauf indication contraire, toutes les températures données ci-dessous sont en degrés Celsius et toutes les pressions sont en bar et sont des pressions absolues. La notation « bar » dans la présente divulgation est donc équivalente à la notation « bar a » ou encore « bara » (désignant la pression absolue).

Par échangeur de chaleur, on entend au sens de la présente invention un dispositif permettant de transférer de l'énergie thermique d'un fluide vers un autre fluide, sans les mélanger. Le flux thermique y traverse la surface d'échange qui sépare les fluides.

### Procédé

La matière première du procédé est un gaz comportant majoritairement du dioxyde de carbone. Par majoritairement, on entend au sens de la présente invention, un gaz comprenant plus de 70% en volume de dioxyde de carbone par rapport au volume total du gaz, de préférence plus de 80% en volume.

Le procédé selon l'invention peut également être mis en œuvre sur des gaz de dioxyde de carbone très purs.

Les autres composants du gaz peuvent être du méthane, de l'oxygène, de l'azote, de l'hydrogène, du monoxyde de carbone, du sulfure d'hydrogène, de la vapeur d'eau et des composés organiques volatils nommés ci-après VOC. La composition du gaz dépend du procédé source, c'est-à-dire du procédé préalable. Un gaz issu d'une cimenterie n'a pas la même composition chimique d'un gaz issu de l'épuration de biogaz généré par un méthaniseur.

En entrée du procédé, la température du gaz est de préférence comprise entre 15°C et 90°C, de préférence entre 20°C et 40°C.

En entrée du procédé, la pression du gaz est de préférence à une pression proche de la pression atmosphérique, avantageusement entre 1 bar et 1,1 bar.

Le procédé selon l'invention comprend les quatorze étapes consécutives suivantes : étapes a) à n).

### Etape a) -Filtration(s) au charbon actif

En début de procédé, le gaz subit une ou plusieurs filtrations au charbon actif. De préférence, le procédé comporte entre une et cinq étapes de filtration au charbon actif, et plus particulièrement entre deux et trois étapes de filtration au charbon actif.

L'étape de filtration au charbon actif vise à éliminer les composés organiques volatiles présents dans le gaz.

### Filtration(s) éventuelle(s)

Le gaz ainsi filtré peut ensuite subir une ou plusieurs étapes de filtration, par exemple une filtration à particules de manière à éliminer les particules de charbon actif potentiellement présentes dans le gaz, notamment les résidus de charbon actifs sous forme de poudre, et les poussières suite à la ou aux étapes de filtrations sur charbon actif précédentes.

Le filtre à particules peut par exemple être un tamis moléculaire.

### Etape b)- Refroidissement(s) du gaz

Le gaz filtré subit une ou plusieurs étapes de refroidissement à l'aide d'un échangeur de chaleur. L'énergie thermique ou calorifique est extraite du gaz à l'aide d'une source de refroidissement. Cette source de refroidissement peut être sélectionnée parmi l'air via un dispositif aéroréfrigérant, l'eau ou encore l'eau glycolée.

Le but de cette étape est d'imposer une température au gaz en début du procédé. En effet, la température du gaz en entrée du procédé est variable. Elle fluctue notamment en fonction du type de procédé, qui génère le gaz.

Le ou les étapes de refroidissement permettent ainsi d'atteindre une température comprise entre 10 et 20°C, de préférence entre 10 et 15°C, avantageusement 12°C.

Selon un mode de réalisation du procédé selon l'invention, le procédé comporte deux étapes de refroidissement, la première utilisant l'air comme fluide de refroidissement et la seconde utilisant de l'eau comme fluide de refroidissement.

L'utilisation de fluides refroidissants différents et dans cet ordre permet une diminution progressive de la température du gaz et diminue l'énergie consommée, si un seul échangeur avait été utilisé.

Selon un autre mode de réalisation du procédé selon l'invention, le procédé comporte deux étapes de refroidissement, la première utilisant l'air comme fluide de refroidissement et la seconde utilisant de l'eau comme fluide de refroidissement et une étape de filtration à particules de préférence à tamis afin d'éliminer les poussières entre ceux deux étapes de refroidissement.

### Etape c)-Surpression du gaz

Le gaz subit ensuite une étape de surpression. Le but de cette étape est d'imposer une pression supérieure à la pression atmosphérique à l'entrée du compresseur utilisé à l'étape e). Le surpresseur aspire le gaz et le comprime pour atteindre une pression en sortie de compresseur comprise entre 1.05 et 1.40 bar.

Le gaz traverse ensuite un réservoir tampon, qui a pour fonction de stabiliser la pression du gaz au sein du procédé. En d'autres termes, le réservoir tampon vise à amortir les fluctuations de débit du gaz, qui dépendent du procédé de production de ce gaz. Ce réservoir est positionné en aval du surpresseur et amont du compresseur de manière à ce que la pression en entrée du compresseur soit constante.

### Etape d)- Refroidissement du gaz

Le gaz traverse ensuite un ou plusieurs échangeurs afin d'être refroidi avant l'entrée du compresseur.

L'étape c) de suppression réchauffe légèrement le gaz. De plus, l'étape de compression e) provoque une importante montée en température du gaz. Par conséquent, il est avantageux de refroidir le gaz avant son entrée dans le compresseur de manière à ce que l'étape de compression soit la plus efficace possible.

Cette ou ces étapes de refroidissement permettent d'atteindre une température comprise entre 5 et 40°C, avant l'entrée du compresseur.

De préférence, le procédé comporte deux étapes de refroidissement, la première utilisant l'eau comme fluide de refroidissement et la seconde utilisant de l'eau glycolée comme fluide de refroidissement.

L'utilisation de fluides refroidissants différents et dans cet ordre permet une diminution progressive de la température du gaz et diminue l'énergie consommée, si un seul échangeur avait été utilisé.

### Etape e) -Compression du gaz

En entrée du compresseur, la pression du gaz est comprise entre 1,05 et 1,40 bar. En sortie du compresseur, la pression du gaz est comprise entre 15 et 25 bars.

L'augmentation de la pression du gaz permet de réduire la puissance nécessaire à la liquéfaction du dioxyde de carbone et permet d'améliorer le rendement du procédé.

Au cours de cette étape de compression, le gaz doit être comprimé au moins à une pression supérieure à la pression du point triple du dioxyde de carbone, c'est-à-dire 5,18 bars, afin d'éviter le givrage.

De préférence, la compression se fait en au moins deux étapes, à l'aide d'un compresseur multi-étagé. A chaque étage, en sortie du compresseur, au moins deux échangeurs de chaleur montés en série sont utilisés de manière à récupérer à différents niveaux de température l'énergie générée par la compression du gaz. De plus, le refroidissement du gaz permet de protéger le compresseur d'éventuelles surchauffes.

De préférence, un compresseur sec sans huile est utilisé. Il permet d'éviter la contamination du gaz avec des résidus d'huile.

De préférence, le procédé utilise un compresseur bi-étagé. En sortie du premier compresseur, la température du gaz est comprise entre 110°C et 210°C, de préférence entre 150°C et 190°C. En sortie du second compresseur, la température du gaz est comprise entre 150°C et 220°C. Les au moins deux échangeurs montés en série permettent de diminuer cette gamme de température entre 25 et 50°C.

En sortie du compresseur, le gaz se trouve de préférence à 206°C et 25 bars.

### Etape f) - Filtration(s)

En sortie du compresseur, le gaz est saturé en humidité.

Le gaz compressé subit une ou plusieurs filtrations de manière à éliminer de les condensats, des poussières et éventuellement les impuretés générées lors de la compression.

La filtration peut s'effectuer sur des tamis moléculaires.

### Etape g) -Séchage

Le gaz est ensuite séché de manière à éliminer les traces d'eau restantes et atteindre une température de rosée en sortie du dispositif de séchage comprise entre -65 et -45°C à 25 bars ou bien une teneur en eau inférieure à 20 ppm.

De préférence, une zéolithe adsorbant sélectivement l'eau est utilisée. L'appareil utilisé pour effectuer cette étape de séchage peut être équipé de deux colonnes, l'une adsorbant les traces d'humidité du gaz et la seconde permettant la désorption de l'eau, c'est-à-dire la régénération de la colonne. Un fonctionnement cyclique et en continu des deux colonnes est préféré.

Cette étape de séchage est essentielle, à la fois pour respecter les spécifications du grade alimentaire et afin d'éviter les phénomènes de givre au niveau des échangeurs ultérieurs.

### Etape h) Filtration(s)

Le gaz séché subit ensuite une ou plusieurs étapes de filtration supplémentaires de manière à éliminer d'éventuelles traces d'impuretés. La filtration peut s'effectuer sur des tamis moléculaires.

Le gaz traverse ensuite un réservoir tampon, qui a pour fonction de stabiliser la pression au sein du procédé et d'homogénéiser la composition du gaz. Ce réservoir est positionné en aval du compresseur de manière à ce que la pression en sortie du compresseur soit constante.

### Eventuelle(s) étape(s) de filtration

Le gaz peut encore subir une ou plusieurs nouvelles étapes de filtration, de présence au charbon actif, de manière à éliminer d'éventuelles impuretés. Une filtration. Le but est que le gaz soit le plus pur possible avant l'étape de liquéfaction i).

### Eventuelle(s) étape(s) de refroidissement

Le gaz peut traverser ensuite un ou plusieurs échangeurs de chaleur de manière à le refroidir progressivement. Plus le gaz sera refroidi avant l'étape de liquéfaction i), plus le coût énergétique de cette étape de liquéfaction sera moindre.

De préférence, le procédé comporte une étape de refroidissement utilisant un échangeur à l'eau glycolée.

### Eventuelle(s) étape(s) de filtration

Le gaz peut encore subir une ou plusieurs nouvelles étapes de filtration, de présence au charbon actif, de manière à éliminer d'éventuelles impuretés.

### Etape i)- 1ere liquéfaction du gaz

Le gaz traverse ensuite un liquéfacteur permettant le changement d'état du dioxyde de carbone. Celui-ci passe de l'état gazeux à l'état liquide. Le liquéfacteur est un échangeur, qui utilise un fluide frigorigène. En sortie du liquéfacteur, un fluide diphasique, qui comporte de dioxyde de carbone liquéfié est obtenu. Il est à une température comprise entre -25°C et -35°C.

### Etape j) -Distillation

Le fluide subit une étape de distillation de manière à isoler le dioxyde de carbone sous forme liquéfiée. Ainsi, le dioxyde de carbone liquéfié est récupéré en pied de colonne, tandis que le gaz est récupéré en tête de la colonne. La température au sein de la colonne est comprise entre -18°C et -45°C à une pression comprise entre 15 et 25 bars.

### Eventuelle purge

A ce stade du procédé, le dioxyde de carbone récupéré peut être analysé. En fonction de la pureté du liquide obtenu, le circuit peut comporter une vanne de dérivation. Si la pureté du liquide récupéré n'est pas suffisante, le liquide peut être envoyé à l'atmosphère une fois réchauffé. Si la pureté du liquide récupéré est satisfaisante, le liquide peut être envoyé directement à un réservoir de stockage ou bien être utilisé.

### Etape k) -Récupération du dioxyde de carbone liquéfié

Le dioxyde de carbone liquéfié est récupéré. Il peut être envoyé dans un réservoir pour être stocké. Il peut également être utilisé directement pour une application ultérieure.

### Etape I) -2nde liquéfaction du gaz

Le gaz récupéré en tête de la colonne de distillation à l'étape j) est un gaz comportant une teneur en dioxyde de carbone inférieure à celle du gaz entrant dans le procédé selon l'invention. Ce gaz comporte du dioxyde de carbone, qui ne s'est pas liquéfié au cours du procédé. Ce gaz peut éventuellement comporter de l'oxygène, de l'azote, du méthane, de l'hydrogène, du monoxyde de carbone selon la source du gaz initial.

Le gaz traverse ensuite un liquéfacteur afin d'être refroidi à une température comprise entre -35°C et -45°C.

Cette étape permet de liquéfier le dioxyde de carbone, non encore liquéfié et isolé à ce stade du procédé. Cette étape constitue la deuxième étape de liquéfaction. A l'issue de cette étape, un fluide diphasique est obtenu.

### Etape m) -Séparation des phases

Le fluide diphasique issu de l'étape précédente est amené à un séparateur, qui permet de séparer la phase liquide de la phase gazeuse.

### Etape n) -Recyclage de la phase liquide vers la distillation

La phase liquide issue de l'étape précédente, comportant le dioxyde de carbone liquéfié est recyclée au niveau de l'étape j) de distillation.

### Etape o) -Recyclage éventuel de la phase gazeuse

La phase gazeuse issue de l'étape de séparation m) peut être réchauffée à l'aide d'un échangeur.

Le gaz réchauffé peut être filtré sur membrane de manière à séparer un gaz riche en dioxyde de carbone d'un gaz pauvre en dioxyde de carbone.

Par gaz riche en dioxyde de carbone, on entend un gaz composé de plus de 50% en volume par rapport au volume total de gaz de dioxyde de carbone.

Par gaz pauvre en dioxyde de carbone, on entend un gaz composé de moins de 50% en volume par rapport au volume total de gaz de dioxyde de carbone.

Le gaz riche en dioxyde de carbone peut être recyclé et envoyé dans le circuit, avant l'étape c) de surpression du gaz.

Le gaz pauvre en dioxyde de carbone peut être recyclé et envoyé vers une unité de production du gaz traité par le procédé selon l'invention.

Par exemple, dans le gaz du traitement d'un biogaz épuré, si le gaz comporte majoritairement du méthane, celui-ci peut être recyclé vers l'unité de méthanisation ou bien vers l'unité d'épuration.

Dans le cas du traitement d'un gaz issu d'une oxycombustion, si le gaz comporte majoritairement de l'oxygène, celui-ci peut être recyclé vers l'unité de combustion.

Dans le cas du traitement d'un gaz issu d'un vaporeformage, si le gaz comporte majoritairement de l'hydrogène, celui-ci peut être recyclé vers l'unité de vaporeformage.

Par conséquent, en fonction du gaz traité, il est possible de recycler, donc valoriser, les gaz récupérés suite à la liquéfaction du dioxyde de carbone.

### Dispositif

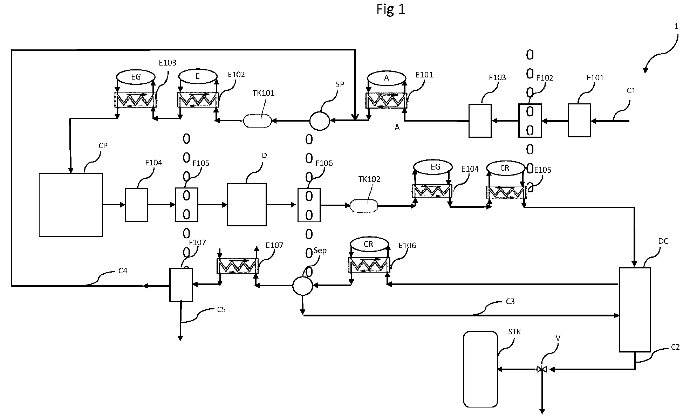

L'invention a également pour objet le dispositif, qui permet la mise en œuvre du procédé selon l'invention. Ce dispositif est illustré à la figure 1. Cette figure représente un mode de réalisation selon l'invention.

Le dispositif de production de dioxyde de carbone liquide, également appelé installation de liquéfaction de gaz, peut être disposé, par exemple, à la sortie d'une unité d'épuration de biogaz, à la sortie d'une unité de récupération des gaz produits par une cimenterie, à la sortie d'une unité de vaporeformage ou encore à la sortie d'une unité d'oxycombustion. Le dispositif 1 est fluidiquement connecté à une unité de production d'une gaz riche en dioxyde de carbone via l'entrée C1.

De préférence, le dispositif selon l'invention se trouve sur le site de méthanisation et d'épuration du biogaz.

Le gaz à traiter est amené dans le dispositif selon l'invention via une conduite d'entrée C1. Le gaz est amené dans une unité de filtration F101 de manière à subir une première purification. Une succession de plusieurs filtrations peut être réalisée. La figure 1 illustre la succession de 3 unités de filtration F101, F102 et F103. De préférence, les unités de filtration F101 et F102 sont au charbon actif et l'unité de filtration F103 est sur tamis moléculaire .

Le gaz est ensuite amené à un échangeur E101 de manière à subir un premier refroidissement. L'échangeur E101 peut utiliser l'eau comme fluide refroidissant. L'air est noté A sur la figure 1.

Le gaz ainsi refroidi est ensuite amené à un surpresseur SP de manière à imposer au gaz en sortie du surpresseur une pression supérieure à la pression atmosphérique.

En sortie du surpresseur SP, le gaz est amené dans un réservoir tampon TK101 permettant de réguler la pression du gaz au sein du procédé.

Le gaz est ensuite amené vers un ou plusieurs échangeurs, de préférence deux échangeurs E102 et E103, de manière à refroidir le gaz avant son entrée dans le compresseur CP. L'échangeur E102 peut utiliser l'eau comme fluide refroidissant. L'eau est notée E sur la figure 1. L'échangeur E103 peut utiliser l'eau glycolée comme fluide refroidissant. L'eau glycolée est notée EG sur la figure 1.

Le gaz en ensuite amené dans le compresseur sec sans huile CP. En sortie du compresseur, le gaz se trouve de préférence à 206°C et 25 bars.

Ensuite, ce gaz est amené dans deux unités successives de filtration F104 et F105 afin d'éliminer les impuretés et les traces d'eau.

Ce gaz est ensuite amené dans un dispositif de séchage D de manière à éliminer la totalité des traces d'eau.

En sortie du dispositif de séchage D, le gaz est à nouveau filtré pour éliminer les traces résiduelles d'impuretés à l'aide de l'unité de filtration F106. Le gaz est ensuite conduit dans un réservoir tampon TK102. Ce réservoir tampon permet de stabiliser la pression du gaz au sein du dispositif et d'homogénéiser la composition du gaz.

Le gaz est ensuite amené dans l'échangeur E104 afin de le refroidir, puis dans le liquéfacteur E105, de manière à liquéfier le dioxyde de carbone présent dans le gaz.

Selon un mode de réalisation préféré, le dispositif peut comporter au moins une unité de filtration entre échangeur de chaleur E104 et le liquéfacteur E105, avantageusement deux unités de filtration.

En sortie du liquéfacteur E105, le dioxyde de carbone au sein du fluide se trouve sous forme liquide. Le fluide en sortie du liquéfacteur E105 est à une température comprise entre -25°C et -35°C.

A ce stade du procédé, le gaz est partiellement, voire totalement liquéfié. Entre l'échangeur E104 et le liquéfacteur E105, le dispositif peut comporter des unités de filtration de manière à éliminer les impuretés restantes, notamment si un dioxyde de carbone de grade alimentaire est visé.

Le gaz est ensuite conduit dans la colonne de distillation DC.

Le dioxyde de carbone liquéfié est récupéré en bas de la colonne de distillation DC.

Si le gaz est de pureté satisfaisante, alors il peut être conduit dans un réservoir de stockage STK.

Si le gaz n'est pas de pureté satisfaisante, alors il peut être envoyé à l'atmosphère à l'aide de la vanne V.

Le mélange gazeux récupéré en haut de la colonne de distillation DC est conduit dans le liquéfacteur E106.

En sortie du liquéfacteur E106, le fluide est diphasique. Il est amené au séparateur Sep.

La phase liquide, issue du séparateur Sep, qui comporte du dioxyde de carbone liquéfié est renvoyée à la colonne de distillation DC, via la conduite C3.

La phase gazeuse, issue du séparateur Sep, est réchauffée à l'aide de l'échangeur E107, puis amené à une unité de filtration sur membrane F107.

L'unité de filtration F107 sépare un gaz riche en dioxyde de carbone n'ayant pas été liquéfié au cours du procédé d'un gaz pauvre en dioxyde de carbone. Le gaz riche en dioxyde de carbone est recyclé en amont du surpresseur SP via la conduite C4. Le gaz pauvre en dioxyde de carbone est éventuellement recyclé via la conduite C5 vers l'unité de production du gaz traité par le procédé selon l'invention.

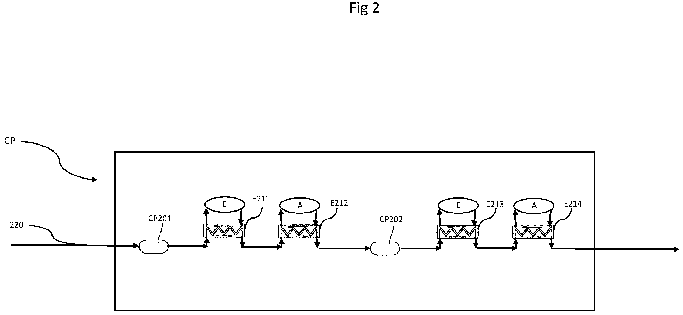

La figure 2 illustre un mode de réalisation du compresseur sec sans huile CP. Celui-ci est un compresseur bi-étagé. Les étages de compression du circuit sont montés en série. Cela signifie que les compresseurs se situent sur une même branche du circuit. L'augmentation de la pression du gaz permet de réduire la puissance nécessaire à la liquéfaction du mélange et permet d'améliorer le rendement du procédé. Afin d'éviter l'augmentation de la température du gaz à la sortie du compresseur, la compression est réalisée en deux étapes. Cela permet d'améliorer le rendement de la compression en refroidissant le gaz à la sortie de chaque étage. Le compresseur est également protégé des éventuelles surchauffes.

Le gaz provenant de l'échangeur E103 illustré à la figure 1 entre dans le compresseur CP via la conduite 220. Le gaz est amené au compresseur CP201. En sortie du compresseur CP201, l'énergie thermique générée par la compression est récupérée par l'échangeur E211, puis l'échangeur E212. Ces échangeurs permettent de refroidir le gaz et de chauffer le fluide à l'intérieur de l'échangeur.

En sortie de l'échangeur E212, le gaz est amené au compresseur CP202. En sortie du compresseur CP202, l'énergie thermique générée par la compression est récupérée par l'échangeur E213, puis l'échangeur E214.

Selon un mode de réalisation particulier, les échangeurs E211 et E213 utilisent de l'eau comme fluide caloporteur. Cette eau réchauffée par les échangeurs peut être utilisée pour chauffer des structures trouvant à proximité du dispositif selon l'invention. Les échangeurs E212 et E214 utilisent de l'air comme fluide caloporteur. Les échangeurs E211 et E212 et indépendamment les échangeurs E213 et E214 permettent une diminution en température du gaz.

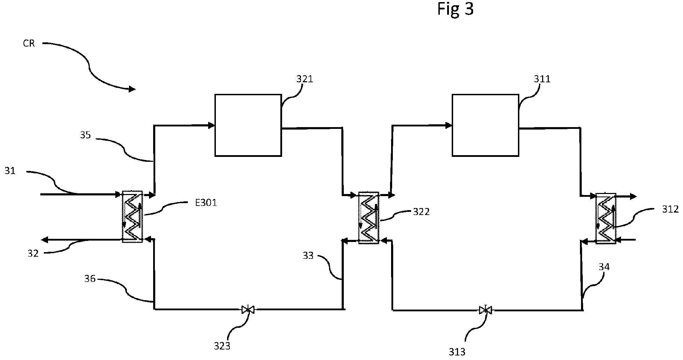

La figure 3 illustre un mode de réalisation d'un dispositif de refroidissement. Le dispositif de production de dioxyde de carbone liquide selon l'invention comporte deux liquéfacteurs E105 et E106 illustré à la figure 1. La figure 3 illustre un dispositif de refroidissement CR pouvant être connecté aux liquéfacteurs E105 et E106. Ce dispositif de refroidissement est connecté à un liquéfacteur E301 à l'entrée, duquel un gaz non liquéfié 31 est introduit et à la sortie duquel un gaz liquéfié 32 est extrait. D'autre part, le liquéfacteur E301 comporte une sortie 35 et une entrée 36. Les sortie 35 et entrée 36 sont destinées à être fluidiquement connectées au dispositif de refroidissement CR.

Selon ce mode de réalisation, le dispositif de refroidissement CR comporte une série de deux circuits de refroidissement indépendants positionnés en cascade comprenant ici un circuit de refroidissement basse température 33 et un circuit de refroidissement haute température 34. Le principe de base du dispositif de refroidissement est que le circuit de refroidissement basse température 33 extrait les calories du liquéfacteur E301 en étant connecté fluidiquement aux sortie 35 et entrée 36 du liquéfacteur E301. De son côté, le circuit de refroidissement haute température 34 extrait les calories du circuit de refroidissement basse température 33. Ainsi, les deux circuits de refroidissement haute température 34 et basse température 33 sont indépendants et sont en parallèle l'un par rapport à l'autre, tout en étant en cascade.

De manière connue en soi, le circuit de refroidissement haute température 34 comporte dans le sens de circulation d'un premier fluide frigorigène illustré par les flèches sur la figure, un compresseur associé 311, un condenseur 312, ici sous la forme d'un échangeur thermique, qui permet d'extraire les calories du circuit de refroidissement haute température 34 vers l'extérieur du dispositif de refroidissement. En aval du condenseur 312, le circuit de refroidissement haute température 34 comporte un détendeur 313.

De son côté, le circuit de refroidissement basse température 33 comporte, toujours dans le sens de circulation d'un deuxième fluide frigorigène, qui lui est associé, illustré par les flèches sur la figure, un compresseur associé 321 suivi d'un condenseur 322 suivi d'un détendeur 323. Le condenseur 322 est ici un échangeur thermique dont la deuxième partie forme un évaporateur pour le circuit de refroidissement haute température 34 dans lequel il est intégré en aval du détendeur 313 et en amont du compresseur 311 du circuit de refroidissement haute température 34. Ainsi, le condenseur/évaporateur 322 forme, ici dans ce mode de réalisation du dispositif de refroidissement CR, des moyens d'extraction de calories connectant thermiquement le circuit de refroidissement basse température 33 au circuit de refroidissement haute température 34.

Le circuit de refroidissement basse température 33 comporte en aval du détendeur 323 une conduite de sortie connectée fluidiquement à l'entrée 36 du liquéfacteur E301. De même, le circuit de refroidissement basse température 33 comprend une conduite d'entrée en amont du compresseur 321 qui est connectée fluidiquement à la sortie 35 du liquéfacteur E301.

Le circuit de refroidissement basse température 33 et le circuit de refroidissement haute température 34 peuvent comporter en aval des compresseurs des séparateurs de manière à séparer l'huile extraite du compresseur. Une boucle de recyclage de cette huile vers le compresseur est envisageable.

Selon un mode de réalisation préféré de l'installation selon l'invention, le dispositif de liquéfaction 1 selon l'invention est compris dans un container. Un container est une caisse de dimensions normalisées qui peut être utilisée pour la manutention, le stockage ou le transport de matières ou de lots d'objets dont elle permet de simplifier l'emballage. Par exemple le container dans lequel le dispositif de liquéfaction est disposé peut être un container de transport maritime tel que normalisé dans les normes ISO 668:2020 et ISO 1496-3. Ainsi le dispositif de liquéfaction est facilement transportable et peut être installé à proximité de l'unité de production du gaz à liquéfier.

Les exemples, qui suivent permettent d'illustrer la présente invention, mais ne sont en aucun cas limitatifs.

### Exemples

### 1. Pureté du dioxyde de carbone liquide produit

Un gaz issu d'une unité d'épuration d'un biogaz produit par un méthaniseur de composition suivante est traité par le procédé selon l'invention :

**Tableau 1**

| | |
|---|---|
| CO₂ | 91,7 % |
| CH₄ | 8% |
| O₂ | 0,15% |
| N₂ | 0,15% |

En sortie du procédé, le gaz est de composition suivante :

**Tableau 2**

| | unité | Spécification | Analyse |
|---|---|---|---|
| CO₂ | % | >=99,90 | >100 |
| H₂O | ppm | <=20,00 | <1 |
| CO | ppm | <=5,00 | =1,05 |
| NOx | ppm | <=2,00 | =0,01 |
| S | ppm | <=0,10 | =0,01 |
| CH₃OH | ppm | <=10,00 | =0,00 |
| CH₃CHO | ppm | <=0,20 | =0,01 |
| THCoCH₄ | ppm | <=20,00 | =0,00 |
| C₆H₆ | ppm | <=0,02 | =0,00 |
| H₂ | ppm | <=10,00 | =0,02 |
| NH₃ | ppm | <=2,50 | =0,00 |
| N₂ | ppm | <=60,00 | =0,02 |
| O₂ | ppm | <=30,00 | =0,00 |

Le dioxyde de carbone produit est conforme à la pharmacopée européenne, à la norme EN936/EIGA/ISBT et au règlement RE 231/2012CE.

### 2. Consommation énergétique du procédé

Le procédé selon l'invention consomme de 0,18kW/h à 0,27kW/h par kg de CO₂ liquide produit, en fonction de la composition du gaz traité.

## Revendications

1. Procédé de production de dioxyde de carbone liquide à partir d'un gaz comportant plus de 70% en volume de dioxyde de carbone comprenant les étapes successives suivantes :
a) une ou plusieurs étapes de filtration au charbon actif puis
b) une ou plusieurs étapes de refroidissement du gaz, la température du gaz en sortie de cette étape étant comprise entre 10 et 20°C, puis
c) une étape de surpression du gaz, la pression du gaz en sortie de cette étape étant comprise entre 1,05 et 1,40 bar,
d) une ou plusieurs étapes de refroidissement du gaz, puis
e) une étape de compression du gaz, la pression du gaz en sortie de cette étape étant comprise entre 15 et 25 bars, puis
f) une ou plusieurs filtrations puis
g) une étape de séchage du gaz, puis
h) une ou plusieurs filtrations puis
i) une étape de liquéfaction du gaz, le fluide en sortie de cette étape étant à une température comprise entre -25°C et -35°C, puis
j) une étape de distillation du fluide de manière à isoler le dioxyde de carbone liquéfié
k) une étape de récupération du dioxyde de carbone sous forme liquide issu de l'étape j),
l) une étape de liquéfaction du gaz récupéré en haut de la colonne de distillation à l'étape j), le gaz en sortie de cette étape étant à une température comprise entre -35°C et -45°C, puis
m) une étape de séparation de la phase liquide de la phase gazeuse du fluide issu de l'étape de liquéfaction l), puis
n) une étape de recyclage de la phase liquide issue de la séparation de l'étape m) vers l'étape j) de distillation.

2. Procédé selon la revendication 1, **caractérisé en ce qu'**il comporte une étape de filtration à particules entre les étapes a) et b).

3. Procédé selon la revendication 1 ou 2, **caractérisé en ce qu'**il comporte une étape de refroidissement du gaz entre les étapes h) et i).

4. Procédé selon l'une quelconque des revendications précédentes, **caractérisé en ce qu'**il comporte les étapes successives suivantes :
- une étape de chauffage de la phase gazeuse issue de l'étape m),
- une étape de filtration sur membrane de la phase gazeuse réchauffée,
- une étape de recyclage du gaz issu de l'étape précédente de filtration et composé de plus de 50% en volume par rapport au volume total de gaz de dioxyde de carbone, avant d'étape de surpression c).

5. Dispositif de production de dioxyde de carbone liquide (1) à partir d'un gaz comportant plus de 70% en volume de dioxyde de carbone, **caractérisé en ce qu'**il comporte les éléments suivants, connectés fluidiquement les uns aux autres et dans cet ordre :
- au moins deux unités de filtration (F101, F102, F103) montées en série,
- un échangeur de chaleur (E101) de manière à refroidir le gaz,
- un surpresseur (SP),
- un réservoir tampon (TK101),
- au moins deux échangeurs (E102, E103) montés en série,
- un compresseur sec sans huile (CP),
- au moins une unité de filtration (F104, F105),
- un dispositif de séchage (D), de manière à éliminer les traces d'humidité,
- au moins une unité de filtration (F106),
- un réservoir tampon (TK102),
- au moins un échangeur de chaleur (E104),
- un liquéfacteur (E105),
- une colonne de distillation (DC),
- le pied de la colonne de distillation (DC) étant connecté fluidiquement à une conduite (C2) permettant la récupération du dioxyde de carbone liquéfié,
- la tête de la colonne de distillation (DC) étant connectée à un liquéfacteur (E106) de manière à liquéfier le dioxyde de carbone restant dans le gaz, puis connectée à un séparateur (Sep),
- une conduite (C3) connecte le séparateur (Sep) à la colonne de distillation (DC), permettant le recyclage de la phase liquide comportant majoritairement du dioxyde de carbone.

6. Dispositif selon la revendication 5, **caractérisé en ce que** le compresseur (CP) est un compresseur multi-étagé, muni de au moins deux compresseurs montés en série (CP201, CP202), et muni d'au moins deux échangeurs de chaleur (E211, E212 et E213, E214) montés en série et positionnés en aval de chaque compresseur.

7. Dispositif selon la revendication 5 ou 6, **caractérisé en ce que** les liquéfacteurs (E105, E106) sont reliés à des dispositifs de refroidissement, comportant au moins deux circuits de refroidissement montés en cascade (33, 34).

8. Dispositif selon l'une quelconque des revendications 5 à 7, **caractérisé en ce que** le séparateur (Sep) est connecté fluidiquement à un échangeur thermique (E107), puis à une unité de filtration (F107) sur membrane,
une conduite (C4) relie l'unité de filtration (F107) à la conduite en amont du surpresseur (SP) de manière à recycler le gaz comportant du dioxyde de carbone.

9. Dispositif selon l'une quelconque des revendications 5 à 8, **caractérisé en ce que** la conduite (C2) disposée en sortie de la colonne de distillation (DC) est connectée à une vanne (V), puis à un réservoir de stockage (STK), récupérant le dioxyde de carbone liquéfié.

10. Dispositif selon l'une quelconque des revendications 5 à 9, **caractérisé en ce qu'**il comporte au moins une unité de filtration entre l'échangeur de chaleur (E104) et le liquéfacteur (E105).

11. Dispositif selon l'une quelconque des revendications 5 à 10, **caractérisé en ce qu'**il comporte au moins une unité de filtration entre le réservoir tampon (TK102) et l'échangeur de chaleur (E104).

12. Utilisation du dispositif tel que défini à l'une quelconque des revendications 5 à 11 pour liquéfier un gaz provenant d'une unité de méthanisation, d'une unité d'épuration d'un biogaz, d'une unité de vaporeformage, d'une unité d'oxycombustion, d'une unité de récupération des gaz produits par une cimenterie.

## Patentansprüche

1. Verfahren zur Herstellung von flüssigem Kohlendioxid aus einem Gas, das mehr als 70 Volumen-% Kohlendioxid aufweist, umfassend die folgenden aufeinanderfolgenden Schritte:
a) ein oder mehrere Schritte zur Aktivkohlefiltration, dann
b) einen oder mehrere Schritte zur Kühlung des Gases, wobei die Temperatur des Gases am Ausgang dieses Schritts zwischen 10 und 20 °C ist, und dann
c) einen Schritt zur Druckerhöhung des Gases, wobei der Gasdruck am Ausgang dieses Schritts zwischen 1,05 und 1,40 bar ist,
d) einen oder mehrere Schritte Zur Kühlung des Gases, und dann
e) einen Schritt zur Komprimierung des Gases, wobei der Druck des Gases am Ausgang dieses Schritts zwischen 15 und 25 bar ist, und dann
f) eine oder mehrere Filtrationen, dann
g) einen Schritt zur Trocknung des Gases, dann
h) eine oder mehrere Filtrationen, dann
i) einen Schritt zur Verflüssigung des Gases, wobei das Fluid am Ausgang dieses Schritts auf einer Temperatur zwischen -25 °C und -35 °C ist, und dann
j) einen Schritt zur Destillation des Fluids, um das verflüssigte Kohlendioxid zu isolieren
k) einen Schritt zur Rückgewinnung des Kohlendioxids in flüssiger Form aus Schritt j),
l) einen Schritt zur Verflüssigung des am oberen Ende der Destillationskolonne in Schritt j) gewonnenen Gases, wobei das Gas am Ausgang dieses Schritts auf einer Temperatur zwischen -35 °C und -45 °C ist, dann
m) einen Schritt zur Trennung der flüssigen Phase von der Gasphase des Fluids aus dem Verflüssigungsschritt I), dann
n) einen Schritt zur Rückführung der flüssigen Phase aus der Trennung von Schritt m) in den Destillationsschritt j).

2. Verfahren nach Anspruch 1, **dadurch gekennzeichnet, dass** es zwischen Schritt a) und b) einen Schritt zur Partikelfiltration umfasst.

3. Verfahren nach Anspruch 1 oder 2, **dadurch gekennzeichnet, dass** es zwischen Schritt h) und i) einen Schritt zur Kühlung des Gases umfasst.

4. Verfahren nach einem der vorherigen Ansprüche, **dadurch gekennzeichnet, dass** es die folgenden aufeinanderfolgenden Schritte umfasst:
- einen Schritt zur Erhitzung der Gasphase aus Schritt m),
- einen Schritt zur Membranfiltration der erhitzten Gasphase,
- einen Schritt zur Rückführung des Gases aus dem vorherigen Membranfiltrationsschritt und das zu mehr als 50 Volumen-%, bezogen auf das Gesamtvolumen, aus Kohlendioxidgas besteht, vor dem Schritt zur Druckerhöhung c).

5. Vorrichtung zur Herstellung von flüssigem Kohlendioxid (1) aus einem Gas, das mehr als 70 Volumen-% Kohlendioxid aufweist, **dadurch gekennzeichnet, dass** sie die folgenden Elemente umfasst, die miteinander und in dieser Reihenfolge fluidisch verbunden sind:
- mindestens zwei Filtereinheiten (F101, F102, F103), die in Reihe montiert sind,
- einen Wärmetauscher (E101), um das Gas zu kühlen,
- einen Vorverdichter (SP),
- einen Zwischenspeicher (TK101),
- mindestens zwei Wärmetauscher (E102, E103), die in Reihe montiert sind,
- einen ölfreien Trockenverdichter (CP),
- mindestens eine Filtereinheit (F104, F105),
- eine Trocknungsvorrichtung (D), um Spuren von Feuchtigkeit zu entfernen,
- mindestens eine Filtereinheit (F106),
- einen Zwischenspeicher (TK102),
- mindestens einen Wärmetauscher (E104),
- einen Verflüssiger (E105),
- eine Destillationskolonne (DC),
- wobei der Boden der Destillationskolonne (DC) fluidisch mit einer Leitung (C2) verbunden ist, die die Rückgewinnung von verflüssigtem Kohlendioxid ermöglicht,
- der Kopf der Destillationskolonne (DC) mit einem Verflüssiger (E106) verbunden ist, um das in dem Gas verbleibende Kohlendioxid zu verflüssigen, und dann mit einem Abscheider (Sep) verbunden ist,
- eine Leitung (C3) den Abscheider (Sep) mit der Destillationskolonne (DC) verbindet, wodurch die Rückführung der flüssigen Phase, die überwiegend Kohlendioxid enthält, ermöglicht wird.

6. Vorrichtung nach Anspruch 5, **dadurch gekennzeichnet, dass** der Verdichter (CP) ein mehrstufiger Verdichter ist, der mit mindestens zwei in Reihe montierten Verdichtern (CP201, CP202) versehen ist und mit mindestens zwei in Reihe montierten Wärmetauschern (E211, E212 und E213, E214) versehen ist, die stromabwärts von jedem Verdichter positioniert sind.

7. Vorrichtung nach Anspruch 5 oder 6, **dadurch gekennzeichnet, dass** die Verflüssiger (E105, E106) mit Kühlvorrichtungen verbunden sind, die mindestens zwei in Kaskade montierte Kühlkreisläufe (33, 34) umfassen.

8. Vorrichtung nach einem der Ansprüche 5 bis 7, **dadurch gekennzeichnet, dass** der Abscheider (Sep) fluidisch mit einem Wärmetauscher (E107) und dann mit einer Membranfiltrationseinheit (F107) verbunden ist,
eine Leitung (C4) die Filtereinheit (F107) mit der Leitung stromaufwärts von dem Vorverdichter (SP) verbindet, um das Gas, das Kohlendioxid enthält, zu recyceln.

9. Vorrichtung nach einem der Ansprüche 5 bis 8, **dadurch gekennzeichnet, dass** die am Ausgang der Destillationskolonne (DC) angeordnete Leitung (C2) mit einem Ventil (V) und dann mit einem Speicherbehälter (STK) verbunden ist, der das verflüssigte Kohlendioxid zurückgewinnt.

10. Vorrichtung nach einem der Ansprüche 5 bis 9, **dadurch gekennzeichnet, dass** sie mindestens eine Filtereinheit zwischen dem Wärmetauscher (E104) und dem Verflüssiger (E105) umfasst.

11. Vorrichtung nach einem der Ansprüche 5 bis 10, **dadurch gekennzeichnet, dass** sie mindestens eine Filtereinheit zwischen dem Zwischenspeicher (TK102) und dem Wärmetauscher (E104) umfasst.

12. Verwendung der Vorrichtung, wie definiert in einem der Ansprüche 5 bis 11, zur Verflüssigung eines Gases aus einer Vergärungsanlage, einer Biogasreinigungseinheit, einer Dampfreformierungseinheit, einer Oxy-Verbrennungseinheit, einer Einheit zur Rückgewinnung von Gasen, die in einer Zementfabrik erzeugt werden.

## Claims

1. A method for producing liquid carbon dioxide from a gas containing more than 70% by volume of carbon dioxide comprising the following successive steps:
a) one or more steps of filtration using activated carbon, then
b) one or more gas cooling steps, the temperature of the gas at the end of this step being between 10 and 20°C, then
c) a gas overpressure step, the gas pressure at the end of this step being between 1.05 and 1.40 bar,
d) one or more gas cooling steps, then
e) a gas compression step, the gas pressure at the end of this step being between 15 and 25 bars, then
f) one or more filtrations, then
g) a gas drying step, then
h) one or more filtrations, then
i) a gas liquefaction step, the fluid at the end of this step being at a temperature between -25°C and -35°C, then
j) a step of distilling the fluid so as to isolate the liquefied carbon dioxide,
k) a step of recovering carbon dioxide in liquid form from step j),
l) a step of liquefaction of the gas recovered at the top of the distillation column in step j), the gas at the end of this step being at a temperature between -35°C and - 45°C, then
m) a step of separating the liquid phase from the gas phase of the fluid resulting from the liquefaction step I), then
n) a step of recycling the liquid phase resulting from the separation of step m) to the distillation step j).

2. The method according to claim 1, **characterized in that** it includes a particle filtration step between steps a) and b).

3. The method according to claim 1 or 2, **characterized in that** it includes a gas cooling step between steps h) and i).

4. The method according to any one of the preceding claims, **characterized in that** it includes the following successive steps:
- a step of heating the gas phase obtained from step m),
- a step of membrane filtration of the heated gas phase,
- a step of recycling the gas obtained from the previous filtration step and composed of more than 50% by volume relative to the total volume of carbon dioxide gas, before the overpressure step c).

5. A device for producing liquid carbon dioxide (1) from a gas comprising more than 70% by volume of carbon dioxide, **characterized in that** it includes the following elements, fluidically connected to one another and in this order:
- at least two filtration units (F101, F102, F103) mounted in series,
- a heat exchanger (E101) to cool the gas,
- a booster (SP),
- a buffer tank (TK101),
- at least two exchangers (E102, E103) mounted in series,
- an oil-free dry compressor (CP),
- at least one filtration unit (F104, F105),
- a drying device (D), so as to eliminate traces of humidity,
- at least one filtration unit (F106),
- a buffer tank (TK102),
- at least one heat exchanger (E104),
- a liquefier (E105),
- a distillation column (DC),
- the foot of the distillation column (DC) being fluidically connected to a pipe (C2) allowing the recovery of liquefied carbon dioxide,
- the head of the distillation column (DC) being connected to a liquefier (E106) so as to liquefy the carbon dioxide remaining in the gas, then connected to a separator (Sep),
- a pipe (C3) connects the separator (Sep) to the distillation column (DC), allowing the recycling of the liquid phase mainly comprising carbon dioxide.

6. The device according to claim 5, **characterized in that** the compressor (CP) is a multi-stage compressor, equipped with at least two compressors mounted in series (CP201, CP202), and equipped with at least two heat exchangers (E211, E212 and E213, E214) mounted in series and positioned downstream of each compressor.

7. The device according to claim 5 or 6, **characterized in that** the liquefiers (E105, E106) are connected to cooling devices, including at least two cooling circuits mounted in cascade (33, 34).

8. The device according to any one of claims 5 to 7, **characterized in that** the separator (Sep) is fluidically connected to a heat exchanger (E107), then to a membrane filtration unit (F107),
a pipe (C4) connects the filtration unit (F107) to the pipe upstream of the booster (SP) so as to recycle the gas containing carbon dioxide.

9. The device according to any one of claims 5 to 8, **characterized in that** the pipe (C2) arranged at the outlet of the distillation column (DC) is connected to a valve (V), then to a storage tank (STK), recovering the liquefied carbon dioxide.

10. The device according to any one of claims 5 to 9, **characterized in that** it includes at least one filtration unit between the heat exchanger (E104) and the liquefier (E105).

11. The device according to any one of claims 5 to 10, **characterized in that** it includes at least one filtration unit between the buffer tank (TK102) and the heat exchanger (E104).

12. A use of the device as defined in any one of claims 5 to 11 for liquefying a gas originating from a methanization unit, a biogas purification unit, a steam reforming unit, an oxycombustion unit, a unit for recovering gases produced by a cement plant.
